# EUROPEAN PATENT APPLICATION

(11) **EP 1 460 288 A1**
(43) Date of publication of application: **22.09.2004**
(21) Application number: 03251752.6
(22) Date of filing: 20.03.2003
(51) Int. Cl.: F16C 7/02, F16C 7/06, A63H 27/133, B64C 27/59, B29C 45/14

(54) **Connecting rod with a rotatable terminal**

(71) Applicant: Kyosho Corporation, Chiyoda-ku, Tokyo 102-0093 (JP)
(72) Inventor: Kunii, Makoto, Atsugi, Kanagawa 243-0034 (JP); Kamiya, Yuji, Atsugi, Kanagawa 243-0034 (JP)
(74) Representative: Naylor, Matthew John

(57) **Abstract**

A connecting rod assembly for toys is provided. The connecting rod assembly comprises a metal rod (3); and a rotary connecting terminal (4) attached to at least one of opposite ends (3) of said metal rod, said connecting terminal being of synthetic resin and being integrally molded.

## Description

The present invention relates to a connecting rod assembly for a toy. Of particular interest are radio controlled toys such as toy air planes, toy automobiles, and toy helicopters. Preferably, the invention relates to a connecting rod assembly for conveying the drive of a servo motor to a swash plate by connecting said servomotor and said swash plate, said servomotor being equipped, for example, on a toy helicopter to be driven at a command from a transmitter on the helicopter.

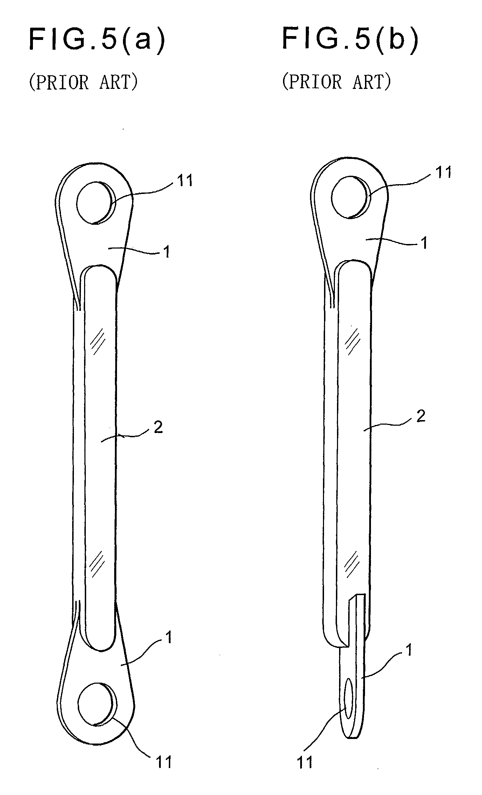

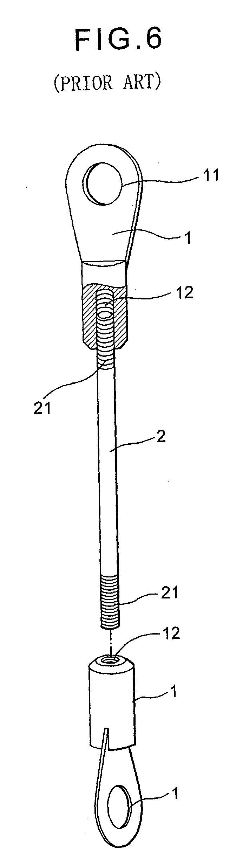

As shown in Fig. 5 and Fig. 6, there is known a connecting rod assembly connecting a servomotor which controls the opening of the engine throttle or the running direction of a radio controlled toy vehicle, for example, a toy automobile equipped with said servomotor to be controlled by a transmitter on the automobile and connecting rods for connecting the engine, the steering or the members to be controlled.

Said connecting rod is composed of a connecting terminal having a ring to be engaged with the servomotor and the member to be controlled; and a rod connecting said connecting terminals. The connecting rod shown in Fig. 5a and Fig. 5b is manufactured by integrally molding said connecting terminal 1 and said rod 2 in a synthetic resin. It is to be noted that the connecting terminal 1 has ring portions 11 extending in a substantially identical plane in Fig. 5a while the connecting terminal of Fig. 5b has ring portions 11 extending in planes perpendicularly to each other.

Since the ring portions 11 of the connecting rod of Fig. 5a are formed to extend in a substantially identical plane, no problem arises if the servomotor and the member to be controlled has engagement portions arranged in parallel to each other. On the other hand, if the engagement portions of the servomotor and the member to be controlled are arranged to extend in planes crossing each other at an angle of 90 degrees, the connecting rod shown in Fig. 5b which has the ring portions extending in planes crossing each other is used.

It is further to be noted that the connecting rod shown in Fig. 6 has a connecting terminal 1 tapped 12 in an axial direction while the rod 2 has opposite ends threaded 21 to be screwed into said tapped connecting terminal 1. This type of connecting rod is capable of connecting the servomotor and the member to be controlled even if there is an angular misalignment in the engagement portions thereof.

It is therefore to be noted that if connecting rods of equal length is needed, two types of connecting rods including the one with connecting terminals 1 having the ring portions 11 extending in a substantially identical plane and the one with connecting terminals having ring portions extending in planes crossing each other at an angle of 90 degrees must be prepared. If the ring portions 11 have a misalignment at an angle other than 90 degrees, connecting rods compatible to such angle must be prepared creating the need for carrying the stock of many types of connecting rods.

With the connecting of Fig. 6, it is possible to do the connecting work even if the engagement portions of the servomotor and those of the members to be controlled are extending in the same plane or in planes crossing each other because the orientation of the ring portions 11 may be changed with respect to the connecting rod 2. However, the overall length tends to change depending on the feed of the screw with the result that if it is difficult to adjust the gap to the desired distance between the engagement portion of the servomotor and that of the member to be controlled.

The present invention is made to address such problems as its preferred object and preferably to provide the means for realizing it by integrally molding a rotary connecting terminal of synthetic resin at least at one end of a metal rod.

Further, one end of the metal rod may be integrally molded with a rotary connecting terminal of synthetic resin while the other end may be molded with an attachment. Further, one end of the metal rod may be integrally molded with a rotary connecting terminal of synthetic resin while the other end is threaded to be screwed into a tapped connecting terminal.

Further, at least one of said rod may be formed with ring shaped grooves to be engaged on with ring shaped flanges formed by injection molding.
Fig. 1 is an exploded view showing the first embodiment of the connecting rod for toys according to the present invention;
Fig. 2 is a front view of the above embodiment being assembled;
Fig. 3 is a front view of the second embodiment;
Fig. 4 is an exploded view showing the third embodiment; and
Fig. 5a and Fig. 5b show prior art connecting rod for toys, Fig. 5a being a front view thereof with ring portions extending in a substantially identical plane, Fig. 5b being a front view showing the ring portions having a 90 degree angular distance.

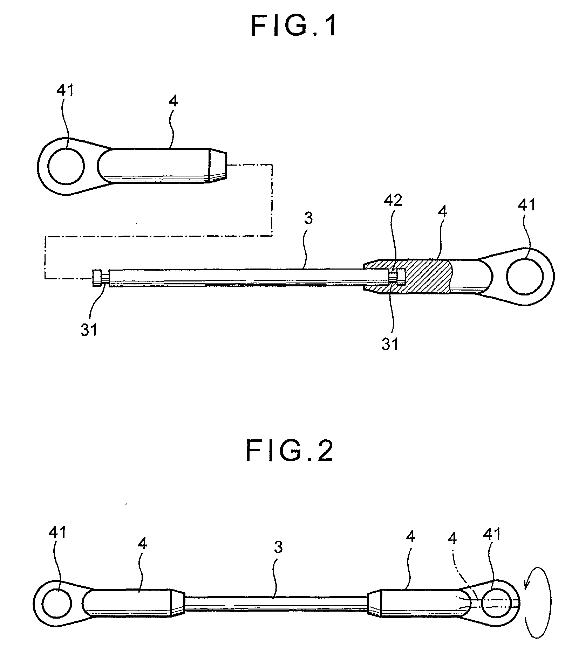

Hereinafter, the first embodiment of the connecting rod for toys according to the present invention will be described with reference to Fig. 1 and Fig. 2.

The numeral 3 denotes a metal rod having ring-shaped grooves 31 formed at opposite ends thereof. The numeral 4 denotes connecting terminals having respective ring-shaped projections 41, said terminals being prepared at opposite ends of said metal rod through injection molding with a synthetic resin. During the injection molding process, the ring shaped flanges 41 are formed to fit into said grooves 31.

When said connecting terminal 4 is forcibly turned relative to the rod 3, the connecting terminal 4 is allowed to rotate relative to the rod 3, which will not come out of engagement with the connecting terminal 4.

Therefore, the entire length is fixed and the ring portion 41 is allowed to rotate such that whether there is an angular misalignment between the connecting portion of the servomotor and that of the member to be controlled or the engaging portions extend in a substantially identical plane, the connection thereof is assured while the need for adjustment of the length is eliminated.

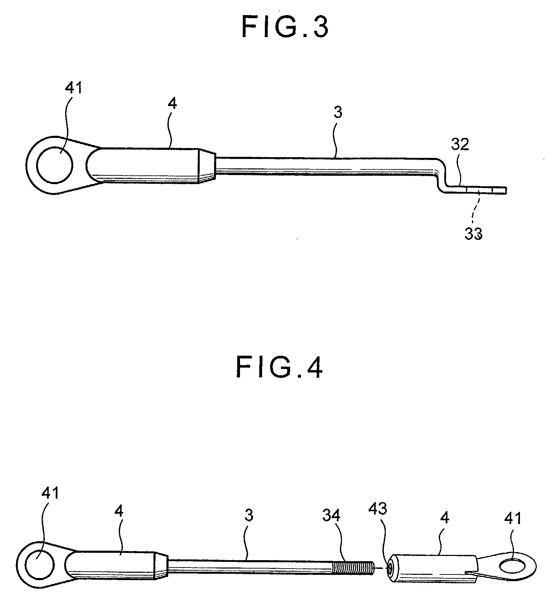

Next, the second embodiment of the invention will be explained with reference to Fig. 3.

In this embodiment, the left end portion of the rod 3 is constructed in the same way as the first embodiment hereinbefore mentioned. On the other hand, the right end portion of the rod 3 is bent at the forward end portion in the form of a crank to provide a connecting terminal 32, in which a ring portion 33 is formed.

With the connecting rod thus constructed, a predetermined member may be screwed in to be fixed to the ring portion 33 in the connecting terminal 32 formed in the rod 3 while the other end of the rod 3 may be connected to a servomotor or the like, thus providing the most suitable means for a connecting rod required to be used with one end fixed.

Further, the third embodiment of the invention will be explained with reference to Fig. 4.

In this embodiment, the left end portion of the rod is constructed in the same way as the first embodiment. On the other hand, the right end portion of the rod 3 is threaded 34 while the connecting terminal 4 having the ring portion 41 is tapped 43.

With the connecting rod thus constructed, the length of the connecting rod can be adjusted by varying the turns of the threaded portion 34 of the rod 3 upon screwing the same into the tapped portion 43 of the connecting terminal 4. Therefore, one connecting rod can be used for the connecting purpose even if the gap between the engagement portion of the servomotor and the engagement portion of the member to be controlled varies to a certain extent.

Preferably, the present invention is characterized in that the rod is formed with connecting terminals for engagement with engagement portions of the servomotor and the member to be controlled, at least one of said connecting terminals being allowed to rotate, thus realizing the reduction of investment in the casting mold and production and inventory control needed on the part of manufacturers. Moreover, the assembly of the control rods at the manufacturing of the toy models may be facilitated.

Further, since the rod and the connecting terminal to be attached thereto are preferably threaded and tapped such that the gap between the rods and the members to be connected thereto is adjustable, a single connecting rod can be adapted to different gaps to a certain extent and a large scale production and cost reduction are facilitated.

## Claims

1. A connecting rod assembly for toys comprising a metal rod; and a rotary connecting terminal attached to at least one of opposite ends of said metal rod, said rotary connecting terminal being of synthetic resin and being integrally molded.

2. A connecting rod assembly for toys comprising a metal rod; a rotary connecting terminal attached to one of opposite ends of said metal rod; and an attachment formed in the other one of said opposite ends of said metal rod, said connecting terminal being of synthetic resin and being integrally molded.

3. A connecting rod assembly for toys comprising a metal rod; and a rotary connecting terminal attached to one of opposite ends of said metal rod, the other one of said opposite ends of said metal rod being threaded, said rotary connecting terminal being tapped, said threaded end of the metal rod being screwed into said rotary connecting terminal, connecting terminal being of synthetic resin and being integrally molded.

4. A connecting rod assembly for toys as set forth in any one of claims 1 to 3, wherein at least one of said rod is formed with ring-shaped grooves, said integrally molded connecting terminal having a ring-shaped flange, said ring-shaped flange being allowed to rotate while being engaged with said ring-shaped groove so as not to go out of engagement with each other.
